# EUROPÄISCHE PATENTANMELDUNG

(11) **EP 3 064 557 A1**
(43) Veröffentlichungstag der Anmeldung: **07.09.2016**
(21) Anmeldenummer: 16158224.2
(22) Anmeldetag: 02.03.2016
(51) Int. Cl.: C09D 167/06, C09D 131/00, C08K 3/34, C09D 5/08, F16L 58/04, C08K 3/36

(54) **BESCHICHTUNGSMATERIAL ZUM SCHUTZ VON RAUCHGASKANALWÄNDEN UND VERFAHREN ZUM HERSTELLEN EINER BESCHICHTUNG**

(30) Priorität: 02.03.2015 DE 102015102920
(71) Anmelder: NPT Consulting UG (haftungsbeschränkt), 32049 Herford (DE)
(72) Erfinder: Noack, Tanja, 48734 reken (DE)
(74) Vertreter: Linnemann, Winfried

(57) **Zusammenfassung**

Die Erfindung betrifft ein Beschichtungsmaterial zum Schutz innerer Oberflächen (10) von Rauchgaskanalwänden (1) gegen Korrosion, wobei das Beschichtungsmaterial eine Mischung aus wenigstens einem mineralischen Matrixmaterial und einem zunächst flüssigen, aushärtenden Bindemittel ist. Das Beschichtungsmaterial gemäß Erfindung ist dadurch gekennzeichnet, dass das Matrixmaterial Siliciumcarbid-Feinmaterial in einer Korngröße bis zu maximal 0,1 mm ist, welches 10 bis 30 Gew.-% des Beschichtungsmaterial bildet, und dass das Bindemittel ein kalthärtendes Vinylesterharz ist, welches 70 bis 90 Gew.-% des Beschichtungsmaterial bildet.

Außerdem betrifft die Erfindung ein Verfahren zum Herstellen einer innere Oberflächen (10) von Rauchgaskanalwänden (1) gegen Korrosion schützenden Beschichtung unter Verwendung eines Beschichtungsmaterials der vorstehend genannten Art.

## Beschreibung

Die vorliegende Erfindung betrifft ein Beschichtungsmaterial zum Schutz innerer Oberflächen von Rauchgaskanalwänden gegen Korrosion, wobei das Beschichtungsmaterial eine Mischung aus wenigstens einem mineralischen Matrixmaterial und einem zunächst flüssigen, aushärtenden Bindemittel ist. Außerdem betrifft die Erfindung ein Verfahren zum Herstellen einer innere Oberflächen von Rauchgaskanalwänden gegen Korrosion schützenden Beschichtung unter Verwendung des vorgenannten Beschichtungsmaterials.

Rauchgaskanäle, wie sie beispielsweise in mit fossilen Brennstoffen betriebenen Kraftwerken, in Müllverbrennungsanlagen oder in anderen industriellen Betrieben, in denen Rauchgase aus Verbrennungsprozessen anfallen, im Einsatz stehen, sind üblicherweise aus nicht korrosionsfestem Stahl, z.B. St37, gebaut und haben daher nur relativ kurze Standzeiten von in der Praxis wenigen Jahren, bis sie erneuert werden müssen. Aus der Praxis ist es bekannt, die Rauchgaskanäle aus beständigeren, jedoch wesentlich teureren Stahllegierungen zu fertigen oder die stählernen Rauchgaskanäle innen mit einer Auskleidung, beispielsweise aus Polyethylenfolie (PE), oder mit einer Beschichtung aus speziellen Lacken, zu versehen, was die Standzeit verlängert. Nachteilig sind dabei aber der hohe Herstellungsaufwand und die hohen Kosten.

So ist es aus der DE 10 2008 023 569 A1 bekannt, eine Schicht auf einem Substrat zum Schutz des Substrates vor Korrosion anzubringen, wobei die Schicht eine polymerbasierte Matrix und ein Oxidationsmittel und/oder einen Oxidationskatalysator umfasst. Die Schicht eignet sich als Schutzbeschichtung für Einrichtungen in Kraftwerken und Industrie, wie zum Beispiel Stahlrohre, die hohen Temperaturen und Angriffen durch korrosive Gase ausgesetzt sind. Zum Aushärten benötigt die Beschichtung allerdings Sauerstoff, der in Form des Oxidationsmittels im Beschichtungsmaterial selbst vorhanden ist. Die Schichtdicken liegen im Bereich zwischen 20 µm und 200 µm. Des Weiteren kann die Schicht Hartstoffpartikel umfassen, bei denen es sich u.a. um Siliciumcarbid handeln kann.

Die WO 95/11282 A1 zeigt ein Korrosionsschutzverfahren für Verbrennungsanlagen, wie z.B. Kraftwerke, wobei das Verfahren vorsieht, dass der Korrosion ausgesetzte metallische Oberflächen mit einem Schutzanstrich überzogen werden, der Bindemittel und Zirkoniumoxid und/oder Ceroxid oder Ceroxidhydrat umfasst. Des Weiteren kann der Schutzanstrich inerte Füllstoffe, wie zum Beispiel Siliciumcarbid, umfassen. Der Schutzanstrich bildet Oxidschichten aus, die eine Passivierung der Oberfläche bewirken.

Die DE 10 2008 047 538 A1 offenbart eine Korrosionsschutzschicht für Stahlwandungen Rauchgas führender Kanäle, die zwei Schichten umfasst, von denen die untere Schicht aus Kunstharz und einer Faser- und/oder Partikelverstärkung und die obere Schicht aus Feuerfestmaterial besteht und wobei an der Kanaloberfläche mechanische, in die Beschichtung hineinragende Haltemittel angebracht sind. Allein die Schicht aus Feuerfestmaterial hat eine bevorzugte Dicke von 50 - 60 mm.

Die WO 03/093374 A2 beschreibt ein Verfahren zum Schutz von Oberflächen von Rohren, Rauchabzügen und Leitungen vor korrosiven Umgebungen im Inneren oder am Äußeren des Rohres, des Rauchabzuges oder der Leitung, wobei das Rohr, der Rauchabzug oder die Leitung mit einer Schicht aus drei Lagen beschichtet wird. Die zweite Lage der Mehrfachschicht kann u.a. Carbide und die dritte Lage der Mehrfachschicht kann u.a. ein epoxy-phenolisches Polymer umfassen.

Als nachteilig wird bei dem vorstehend dargelegten bekannten Stand der Technik angesehen, dass die Beschichtungsmaterialien teuer sind oder zumindest als Bestandteil teure Materialien enthalten, dass die Auftragsmethoden aufwendig sind und dass durch teilweise sehr großen Materialverbrauch pro Flächeneinheit hohe Kosten entstehen, die die Beschichtungsmaterialien und die Verfahren zum Herstellen einer Beschichtung unwirtschaftlich machen.

Für die vorliegende Erfindung stellt sich daher die Aufgabe, ein Beschichtungsmaterial der eingangs genannten Art zur Verfügung zu stellen, das kostengünstig herzustellen und leicht zu verarbeiten ist und das eine gute, lang andauernde Schutzwirkung bietet. Außerdem soll ein Verfahren zum Herstellen einer Beschichtung angegeben werden, das eine hohe Wirtschaftlichkeit aufweist.

Die Lösung des den Beschichtungsstoff betreffenden ersten Teils der Aufgabe gelingt erfindungsgemäß mit einem Beschichtungsstoff der eingangs genannten Art, der dadurch gekennzeichnet ist, dass das Matrixmaterial Siliciumcarbid-Feinmaterial in einer Korngröße bis zu maximal 0,1 mm ist, welches 10 bis 30 Gew.-% des Beschichtungsmaterial bildet, und dass das Bindemittel ein kalthärtendes Vinylesterharz ist, welches 70 bis 90 Gew.-% des Beschichtungsmaterial bildet.

Das erfindungsgemäße Beschichtungsmaterial zeichnet sich durch seine hohe Chemikalienbeständigkeit und Verschleißfestigkeit sowie eine Temperaturbeständigkeit bis etwa 220°C aus. Von Vorteil ist außerdem, dass das Beschichtungsmaterial relativ preiswert ist und dass die Beschichtung relativ einfach anbringbar ist, was insbesondere durch den hohen Anteil an zunächst flüssigem Vinylesterharz als Bindemittel begünstigt wird, welches das Beschichtungsmaterial in seinem Ausgangszustand fließfähig macht.

Ein aufwendiges Zufügen oder Zuführen von Hilfsstoffen, wie Oxidationsmitteln, oder ein Zuführen von Energie, wie Wärme, ist dabei vorteilhaft nicht erforderlich.

Zudem bietet das erfindungsgemäße Beschichtungsmaterial nach seinem Aushärten einen guten, über lange Zeit wirksamen Korrosionsschutz für die üblicherweise aus einfachem Stahl bestehenden Rauchgaskanalwände bietet, was die Standzeit der Rauchgaskanäle erheblich verlängert. Da das Beschichtungsmaterial im ausgehärteten Zustand gegen Temperaturen von über 200°C beständig ist, kann es in allen Rauchgaskanälen, in denen Rauchgastemperaturen unterhalb von 200°C, z.B. bis 180°C, auftreten, eingesetzt werden. Zudem ist das Beschichtungsmaterial im ausgehärteten Zustand gegen viele Säuren, insbesondere gegen in Rauchgasen sehr oft enthaltene, in Rauchgaskanälen kondensierende Schwefelsäure, beständig, welche bei Stahlwänden von Rauchgaskanälen besonders große und kurzfristige Schäden verursacht.

Das Beschichtungsmaterial ist nach seinem Aushärten noch in einem ausreichenden Maße elastisch, um im Betrieb auftretende thermische Dehnungen und Schrumpfungen der Rauchgaskanalwände sowie Formveränderungen der Rauchgaskanalwände, z. B. bei einem Begehen der Kanäle zu Inspektions-, Reinigungsoder Reparaturzwecken, schadlos mitzumachen.

Die vorstehend aufgeführten Vorteile werden nicht nur bei Rauchgaskanalwänden aus Stahl erreicht, sondern werden auch bei betonierten oder gemauerten Rauchgaskanälen, wie Kaminen, erzielt, was ein breites Einsatzgebiet für das erfindungsgemäße Beschichtungsmaterial bietet.

Je nach Einsatzfall und Aggressivität der Rauchgase kann die gesamte innere Oberfläche eines Rauchgaskanals mit dem Beschichtungsmaterial beschichtet werden oder es kann auch nur ein Teil der inneren Oberfläche, wie nur der Boden oder der Boden und ein Teil der Höhe oder die gesamte Höhe der Seitenwände eines Rauchgaskanals mit dem Beschichtungsmaterial beschichtet werden.

Weiterhin ist für das Beschichtungsmaterial erfindungsgemäß vorgesehen, dass das Matrixmaterial 15 bis 25 Gew.-% und das Bindemittel 75 bis 85 Gew.-% des Beschichtungsmaterials bildet.

Insbesondere zur Erhöhung der Elastizität der ausgehärteten Beschichtung wird vorgeschlagen, dass das Beschichtungsmaterial zusätzlich bis zu 10 Gew.-% Kieselsäure in Pulverform enthält.

Die Lösung des zweiten, das Verfahren betreffenden Teils der Aufgabe gelingt erfindungsgemäß mit einem Verfahren zum Herstellen einer innere Oberflächen von Rauchgaskanalwänden gegen Korrosion schützenden Beschichtung unter Verwendung eines Beschichtungsmaterials nach einem der Ansprüche 1 bis 3, welches dadurch gekennzeichnet ist, dass das Beschichtungsmaterial in einer oder mehreren Lagen auf die zu schützenden Oberflächen mit einer Gesamt-Schichtdicke von 3 bis 10 mm, bevorzugt von 4 bis 6 mm, weiter bevorzugt von 5 mm, aufgebracht wird.

Es genügt also eine relativ geringe Schichtdicke des Beschichtungsmaterials, um die gewünschte Schutzwirkung für die Rauchgaskanalwände zu erzielen. Damit ist die Beschichtung der Rauchgaskanalwände schnell und mit geringem Materialaufwand und somit kostengünstig herstellbar, was das Verfahren besonders wirtschaftlich macht.

Die Rauchgaskanäle werden dabei vorteilhaft nicht in einem unzuträglichen Maße mit zusätzlichem, durch die Beschichtung verursachtem Gewicht belastet, sodass eine Verstärkung von die Rauchgaskanäle tragenden Bauteilen in der Regel nicht erforderlich ist.

Um eine besonders haltbare Beschichtung zu erzielen, ist bevorzugt vorgesehen, dass jede Lage in einer Schichtdicke von 0,8 bis 1,2 mm, vorzugsweise von 1 mm, aufgebracht wird. Dabei werden zweckmäßig mehrere entsprechend dünne Lagen der vorgenannten Dicke nacheinander aufgebracht, was eine Beschichtung in Form eines stabilen und doch elastischen Schichtenverbundes ergibt, der gegen Rissoder Bruchbildung besonders unempfindlich ist.

Um das Verfahren besonders schnell und effektiv ausführen zu können, ist bevorzugt vorgesehen, dass das Beschichtungsmaterial auf die zu schützenden Oberflächen aufgesprüht wird. Dieses Aufsprühen ist wegen der guten Fließfähigkeit des Beschichtungsmaterials problemlos möglich, da sich das Beschichtungsmaterial in seinem Ausgangszustand durch den hohen Anteil an flüssigem Vinylester wie eine Flüssigkeit mit darin dispergierten kleinen Feststoffpartikeln in Form des Siliciumcarbid-Feinmaterials und ggf. der Kieselsäure in Pulverform verhält und verarbeiten lässt. Daher können für das Aufsprühen des Beschichtungsmaterials am Markt verfügbare Sprühgeräte verwendet werden, was teure Sonderkonstruktionen vermeidet.

Zwecks eines guten und dauerhaften Halts der Beschichtung auf den Rauchgaskanalwänden werden zweckmäßig die zu schützenden Oberflächen in einem ersten Bearbeitungsschritt vor dem Aufbringen des Beschichtungsmaterials gereinigt und angeraut.

In bevorzugter Ausgestaltung ist dabei vorgesehen, dass die zu schützenden Oberflächen zu ihrer Reinigung und zum Anrauen gestrahlt werden. Hierfür können mobile Strahlvorrichtungen an sich bekannter Bauart eingesetzt werden; das Strahlmittel wird entsprechend den bei der Reinigung zu entfernenden Schmutzablagerungen und entsprechend der gewünschten Rauheit der gereinigten Oberflächen gewählt.

Eine weitere mögliche Maßnahme zum Erzielen eines guten und dauerhaften Halts der Beschichtung auf den Rauchgaskanalwänden besteht darin, dass vor dem Aufbringen des Beschichtungsmaterials eine erste Schicht aus reinem Vinylesterharz in einer Schichtdicke zwischen 0.2 und 0,5 mm, vorzugsweise 0,3 mm, als Haftgrundschicht auf die zu schützenden Oberflächen aufgebracht, vorzugsweise aufgesprüht, wird.

Weiter sieht das erfindungsgemäße Verfahren bevorzugt vor, dass nach dem Aufbringen der Haftgrundschicht aus reinem Vinylesterharz auf diese in deren noch flüssigem Zustand eine Lage von Siliciumcarbid-Grobkorn mit einer Korngröße von 0,7 bis 1,5 mm, vorzugsweise von 0,9 bis 1,1 mm, aufgebracht, vorzugsweise aufgesprüht, wird. Dadurch, dass die Körner des Siliciumcarbid-Grobkorns größer sind als die Schichtdicke der Haftgrundschicht, wird eine relativ grob strukturierte Unterlage für die darauf aufzubringende weitere Beschichtung geschaffen, an der sich das Beschichtungsmaterial gut verankern und verkrallen kann, sodass einem unerwünschten Ablösen der Beschichtung im Betrieb des Rauchgaskanals vorgebeugt wird.

Vorteilhaft für das Erzielen guter Eigenschaften der Beschichtung ist auch, dass vorzugsweise zwischen je zwei aufeinander folgenden, Vinylesterharz verwendenden Auftragsvorgängen jeweils eine für das Aushärten des Vinylesterharzes ausreichende Aushärtezeit, vorzugsweise von 6 bis 10 h, eingehalten wird.

Wenn Rauchgaskanalwände nicht vollflächig beschichtet werden, ergeben sich zwangsläufig Ränder oder Kanten der Beschichtung, Damit diese Ränder oder Kanten nicht zu Schwachstellen werden, von denen aus die Beschichtung durch aggressive Substanzen aus dem Rauchgas angegriffen oder unterwandert wird, schlägt die Erfindung vor, dass entlang von Rändern oder Kanten der fertiggestellten Beschichtung ein die Ränder oder Kanten beiderseits überdeckender Streifen von Vinylesterharz aufgebracht, vorzugsweise aufgesprüht, wird. Hiermit werden die Ränder oder Kanten der Beschichtung wirksam eingeschlossen und abgedichtet, was jeden schädlichen Zutritt von Substanzen aus dem Rauchgas in die Beschichtung hinein oder unter diese verhindert.

Im Folgenden wird ein Ausführungsbeispiel der Erfindung anhand einer Zeichnung erläutert. Die Figuren der Zeichnung zeigen:
- Figur 1: einen Ausschnitt aus einer Rauchgaskanalwand nach einem ersten Beschichtungsschritt, im Querschnitt,
- Figur 2: den Ausschnitt aus Figur 1 nach einem zweiten Beschichtungsschritt, im Querschnitt,
- Figur 3: den Ausschnitt aus Figur 1 und 2 nach Fertigstellung der Beschichtung, im Querschnitt, und
- Figur 4: einen Ausschnitt aus einer teilflächig beschichteten Rauchgaskanalwand, in Ansicht.

In den Zeichnungsfiguren und in der folgenden Figurenbeschreibung sind gleiche Teile stets mit den gleichen Bezugsziffern bezeichnet, sodass nicht zu jeder Zeichnungsfigur alle Bezugsziffern neu erläutert werden müssen.

Die Dicke der in der Zeichnung gezeigten Schichten ist unmaßstäblich und zur besseren Erkennbarkeit übertrieben groß dargestellt.

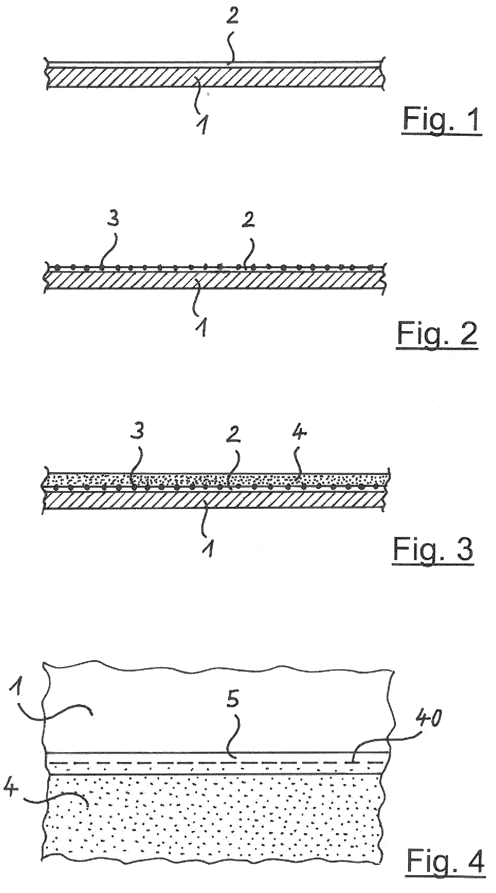

Figur 1 der Zeichnung zeigt einen Ausschnitt aus einer Rauchgaskanalwand 1 nach einem ersten Beschichtungsschritt, im Querschnitt. Unten in Figur 1 ist die hier aus Metall, wie Stahlblech, bestehende Rauchgaskanalwand 1 sichtbar. Auf ihre innere, in der Figur 1 nach oben weisende, gegen Korrosion zu schützende Oberfläche 10 ist in einem ersten Beschichtungsschritt eine Haftgrundschicht 2 aufgebracht, wie aufgesprüht, die aus einem im Ausgangszustand flüssigen, kalthärtenden Vinylesterharz besteht. Die Schichtdicke der Haftgrundschicht beträgt zweckmäßig zwischen 0,2 und 0,5 mm, vorzugsweise 0,3 mm.

Die Viskosität des Materials der Haftgrundschicht 2 wird dabei zweckmäßig so gewählt bzw. eingestellt, dass es auch an vertikalen Wandflächen oder an der Unterseite von horizontalen Wandflächen, also an der Decke von Rauchgaskanälen, hält, ohne abzufließen oder abzutropfen.

Die Figur 2 zeigt den Ausschnitt aus Figur 1 nach einem zweiten Beschichtungsschritt, wieder im Querschnitt. Hier ist auf die Haftgrundschicht 2 in deren noch flüssigem Zustand eine Lage 3 aus Siliciumcarbid-Grobkorn mit einer Korngröße von zweckmäßig 0,7 bis 1,5 mm, vorzugsweise von 0,9 bis 1,1 mm, aufgebracht, vorzugsweise aufgesprüht. Dabei werden die Körner des Siliciumcarbid-Grobkorns in die Haftgrundschicht 2 eingebettet, ragen aber, weil sie größer sind als die Dicke der Haftgrundschicht 2, noch aus dieser hervor. So wird eine grob strukturierte Unterlage für die darauf aufzubringende weitere Beschichtung geschaffen, an der sich das Beschichtungsmaterial gut verankern und verkrallen kann.

Figur 3 zeigt den Ausschnitt aus Figur 1 und 2 nach Fertigstellung der Beschichtung, wieder im Querschnitt. Auf die Haftgrundschicht 2 und die Lage 3 aus Siliciumcarbid-Grobkorn ist nun wenigstens eine Lage 4 aus Beschichtungsmaterial aufgebracht, wieder vorzugsweise aufgesprüht.

Auch die Viskosität des Beschichtungsmaterial wird dabei zweckmäßig so gewählt bzw. eingestellt, dass es auch an vertikalen Wandflächen oder an der Unterseite von horizontalen Wandflächen, also an der Decke von Rauchgaskanälen, hält, ohne abzufließen oder abzutropfen.

Bei Bedarf können auch mehrere Lagen 4 des Beschichtungsstoffs nacheinander aufgetragen werden.

Zwischen allen Vinylesterharz verwendenden Auftragsschritten wird zweckmäßig jeweils eine Aushärtezeit abgewartet, die, abhängig von der Auftragsdicke und den Umgebungsbedingungen, bei etwa 6 bis 10 Stunden liegt.

Das Beschichtungsmaterial besteht aus einer Mischung eines Matrixmaterials in Form von Siliciumcarbid-Feinmaterial mit einer Korngröße bis zu maximal 0,1 mm, welches 10 bis 30 Gew.-% des Beschichtungsmaterial bildet, und eines Bindemittels in Form eines kalthärtendes Vinylesterharzes, welches 70 bis 90 Gew.-% des Beschichtungsmaterials bildet.

Zusätzlich kann das Beschichtungsmaterial bis zu 10 Gew.-% Kieselsäure in Pulverform enthalten.

Vor seinem Aufbringen wird das Beschichtungsmaterial aus seinen genannten Komponenten angemischt, was vorzugsweise in einem Mischer unter Vakuum geschieht.

Figur 4 schließlich zeigt einen Ausschnitt aus einer nur teilflächig beschichteten Rauchgaskanalwand 1, in Ansicht.

Im unteren Teil der Figur 4 ist die Oberfläche 10 der Rauchgaskanalwand 1 beschichtet, wobei der Blick auf die Lage 4 oder die oberste Lage 4 des Beschichtungsmaterials fällt. Im oberen Teil der Figur 4 ist die Oberfläche 10 der Rauchgaskanalwand 1 unbeschichtet.

Dadurch ergibt sich zwangsläufig ein Rand 40 der Beschichtung, der im Betrieb des Rauchgaskanals eine Schwachstelle darstellen könnte. Um hier Schäden durch ein Eindringen von Substanzen aus dem Rauchgas in oder unter die Beschichtung zu verhindern, ist entlang des Randes 40 der fertiggestellten Beschichtung ein den Rand 40 beiderseits überdeckender Streifen 5 von Vinylesterharz aufgebracht, vorzugsweise aufgesprüht. Der Streifen 5 aus Vinylesterharz dichtet und verschließt den Rand 40 und unterbindet ein Eindringen von Substanzen aus dem Rauchgas in oder unter die Beschichtung.

**Bezugszeichenliste:**

| Zeichen | Bezeichnung |
|---|---|
| 1 | Rauchgaskanalwand |
| 10 | Oberfläche von 1 |
| | |
| 2 | Haftgrundschicht |
| | |
| 3 | Siliciumcarbid-Grobkornschicht |
| | |
| 4 | Beschichtungsmateriallage |
| 40 | Rand von 4 |
| | |
| 5 | Streifen aus Vinylester an 40 |

## Patentansprüche

1. Beschichtungsmaterial zum Schutz innerer Oberflächen (10) von Rauchgaskanalwänden (1) gegen Korrosion, wobei das Beschichtungsmaterial eine Mischung aus wenigstens einem mineralischen Matrixmaterial und einem zunächst flüssigen, aushärtenden Bindemittel ist,
**dadurch gekennzeichnet,**
**dass** das Matrixmaterial Siliciumcarbid-Feinmaterial in einer Korngröße bis zu maximal 0,1 mm ist, welches 10 bis 30 Gew.-% des Beschichtungsmaterial bildet, und dass das Bindemittel ein kalthärtendes Vinylesterharz ist, welches 70 bis 90 Gew.-% des Beschichtungsmaterial bildet.

2. Beschichtungsmaterial nach Anspruch 1, **dadurch gekennzeichnet, dass** das Matrixmaterial 15 bis 25 Gew.-% und das Bindemittel 75 bis 85 Gew.-% des Beschichtungsmaterials bildet.

3. Beschichtungsmaterial nach Anspruch 1 oder 2, **dadurch gekennzeichnet, dass** das Beschichtungsmaterial zusätzlich bis zu 10 Gew.-% Kieselsäure in Pulverform enthält.

4. Verfahren zum Herstellen einer innere Oberflächen (10) von Rauchgaskanalwänden (1) gegen Korrosion schützenden Beschichtung unter Verwendung eines Beschichtungsmaterials nach einem der Ansprüche 1 bis 3,
**dadurch gekennzeichnet,**
**dass** das Beschichtungsmaterial in einer oder mehreren Lagen (4) auf die zu schützenden Oberflächen (10) mit einer Gesamt-Schichtdicke von 3 bis 10 mm, bevorzugt von 4 bis 6 mm, weiter bevorzugt von 5 mm, aufgebracht wird.

5. Verfahren nach Anspruch 4, **dadurch gekennzeichnet, dass** jede Lage (4) in einer Schichtdicke von 0,8 bis 1,2 mm, vorzugsweise von 1 mm, aufgebracht wird.

6. Verfahren nach Anspruch 4 oder 5, **dadurch gekennzeichnet, dass** das Beschichtungsmaterial auf die zu schützenden Oberflächen (10) aufgesprüht wird.

7. Verfahren nach einem der Ansprüche 4 bis 6, **dadurch gekennzeichnet, dass** die zu schützenden Oberflächen (10) in einem ersten Bearbeitungsschritt vor dem Aufbringen des Beschichtungsmaterials gereinigt und angeraut werden.

8. Verfahren nach Anspruch 7, **dadurch gekennzeichnet, dass** die zu schützenden Oberflächen (10) zu ihrer Reinigung und zum Anrauen gestrahlt werden.

9. Verfahren nach einem der Ansprüche 4 bis 8, **dadurch gekennzeichnet, dass** vor dem Aufbringen des Beschichtungsmaterials eine erste Schicht aus reinem Vinylesterharz in einer Schichtdicke zwischen 0.2 und 0,5 mm, vorzugsweise 0,3 mm, als Haftgrundschicht (2) auf die zu schützenden Oberflächen (10) aufgebracht, vorzugsweise aufgesprüht, wird.

10. Verfahren nach Anspruch 9, **dadurch gekennzeichnet, dass** nach dem Aufbringen der Haftgrundschicht (2) aus reinem Vinylesterharz auf diese in deren noch flüssigem Zustand eine Lage (3) von Siliciumcarbid-Grobkorn mit einer Korngröße von 0,7 bis 1,5 mm, vorzugsweise von 0,9 bis 1,1 mm, aufgebracht, vorzugsweise aufgesprüht, wird.

11. Verfahren nach einem der Ansprüche 4 bis 10, **dadurch gekennzeichnet, dass** zwischen je zwei aufeinander folgenden, Vinylesterharz verwendenden Auftragsvorgängen jeweils eine für das Aushärten des Vinylesterharzes ausreichende Aushärtezeit, vorzugsweise von 6 bis 10 h, eingehalten wird.

12. Verfahren nach einem der Ansprüche 4 bis 11, **dadurch gekennzeichnet, dass** entlang von Rändern oder Kanten (40) der fertiggestellten Beschichtung ein die Ränder oder Kanten (40) beiderseits überdeckender Streifen (5) von Vinylesterharz aufgebracht, vorzugsweise aufgesprüht, wird.
